## Europäisches Patentamt

## European Patent Office

## Office européen des brevets

(11) Veröffentlichungsnummer: **0 114 024**
**B1**

(12) **EUROPÄISCHE PATENTSCHRIFT**

(45) Veröffentlichungstag der Patentschrift:
**18.03.87**

(21) Anmeldenummer: **83730121.7**

(22) Anmeldetag: **12.12.83**

(51) Int. Cl.⁴: **H 02 K 9/10,** H 02 K 7/14,
E 02 F 3/24

(54) Antrieb eines langsam laufenden ringförmigen Rotors einer Arbeitsmaschine durch einen elektrischen Motor.

(30) Priorität: **20.12.82 DE 3247888**

(43) Veröffentlichungstag der Anmeldung:
**25.07.84 Patentblatt 84/30**

(45) Bekanntmachung des Hinweises auf die Patenterteilung:
**18.03.87 Patentblatt 87/12**

(84) Benannte Vertragsstaaten:
**CH DE FR LI**

(56) Entgegenhaltungen:
**DE-A-3 007 917**
**DE-B-2 138 597**
**DE-C-1 488 042**
**DE-U-1 809 203**

(73) Patentinhaber: **Siemens Aktiengesellschaft Berlin und München, Wittelsbacherplatz 2, D-8000 München 2 (DE)**

(72) Erfinder: **Vandamme, Detlef, Ing. grad., Im Erpelgrund 5a, D-1000 Berlin 27 (DE)**

## Beschreibung

Die Erfindung bezieht sich auf einen Antrieb eines langsam laufenden, ringförmigen Rotors einer Arbeitsmaschine, insbesondere des Schaufelrades eines Baggers, durch einen elektrischen Motor wobei der Rotor der Arbeitsmaschine über zwei axialen Abstand zueinander aufweisende Lager auf einem stehenden Tragkörper gelagert ist, zwischen denen der an dem Rotor befestigten Läufer und der innenliegende, ebenfalls vom Tragkörper getragene Ständer des elektrischen Motors angeordnet ist.

Ein derartiger Antrieb ist aus der Figur 4 der DE-AS 21 38 597 bekannt. Es handelt sich hierbei um den elektrischen Antrieb für das Schaufelrad eines Baggers. Das rotierende Schaufelrad ist über zwei axialen Abstand zueinander aufweisende Lager auf einem feststehenden Tragkörper gelagert. Zwischen den Lagern liegt der an dem rotierenden Schaufelrad befestigte Läufer, bestehend aus dem Joch und den Außenpolen des elektrischen Motors. Außerdem trägt der Tragkörper den innenliegenden, ebenfalls zwischen den Lager liegenden Ständer.

Weiterhin ist in der DE-OS 30 07 917 eine gekapselte, normale elektrische Maschine, deren Ständer den Läufer umgibt, mit einem Wärmetauscher beschrieben. Bei dieser befindet sich der Wärmetauscher oberhalb des Maschinengehäuses und weist ein eigenes Gehäuse auf. Das gasförmige Kühlmedium wird im Zwangsumlauf in einem geschlossenen Kühlkreis geführt und in dem Wärmetauscher rückgekühlt.

Ferner ist aus dem DE-GM 18 09 203 eine elektrische Maschine bekannt, deren Wärmetauscher aus achsparallelen Rohren besteht, zwischen denen das gasförmige Kühlmedium der elektrischen Maschine strömt das von einer Stirnseite her radial eingeleitet wird.

Der vorliegenden Erfindung liegt die Aufgabe zugrunde, einen derartigen Direktantrieb so auszubilden, daß er zum Einsatz in staubigen Gebieten geeignet ist.

Zur Lösung dieser Aufgabe wird der Antrieb gemäß der Erfindung so ausgebildet, daß der elektrische Motor gekapselt ist, daß der Tragkörper ein Rohrkörper ist und daß das zur Kühlung des Motors erforderliche gasförmige Kühlmedium im Zwangsumlauf in einem geschlossenen Kühlkreis geführt und zur Rückkühlung über einen im Innern des Rohrkörpers angeordneten Wärmetauscher geleitet ist.

Weil der elektrische Motor gekapselt ausgebildet ist und von einem im Zwangsumlauf in einem geschlossenen Kühlkreis umlaufenden gasförmigen Kühlmedium gekühlt wird, läßt sich der Antrieb auch in staubigen Gebieten einsetzen, z. B. als Antrieb für Schaufelbagger im Braunkohlen-Tagebau. Der zur Rückkühlung des gasförmigen Kühlmediums des Motors erforderliche Wärmetauscher benötigt ebenfalls keinen zusätzlichen Platzbedarf, da er im Innern des stehenden Rohrkörpers angeordnet ist.

Es ist besonders vorteilhaft, für die Rückkühlung des gasförmigen Kühlmediums aus der Umgebung der Arbeitsmaschine entnommene Luft zu verwenden, die durch die Rohre des Wärmetauschers strömt und diesen über Filter zugeführt wird. Dadurch kann der Antrieb in Gegenden eingesetzt werden, in denen kein Kühlwasser vorhanden ist. Außerdem wird vermieden daß sich die Rohre des Wärmetauschers zu schnell durch Staubablagerungen zusetzen bzw. daß der Wärmeübergang beeinträchtigt wird.

Es ist besonders zweckmäßig das gasförmige Kühlmedium des Motors von der einen Stirnseite des Motors her radial über im Rohrkörper befindliche Öffnungen dem Wärmetauscher zuzuführen und es dann der Rückkühlung über auf der anderen Stirnseite des Motors befindlichen Öffnungen im Rohrkörper wieder dem Motor zurückzuleiten. Auf diese Weise werden die durch die Kapselung des Motors vor den Stirnseiten gebildeten Ringkanäle zur Führung und gleichmäßigen Verteilung des gasförmigen Kühlmediums ausgenutzt, während die axiale Umleitung des Kühlmediums nach dem radialen Durchströmen des Wärmetauschers im Innern des Rohrkörpers erfolgt.

Ferner ist es vorteilhaft, den elektrischen Motor als Synchronmotor mit Außenpolen auszubilden, da dann lediglich der Erregerstrom für den Synchronmotor auf dem rotierenden Teil übertragen werden muß, was in einfacher gebräuchlicher Weise über Schleifringe erfolgen kann.

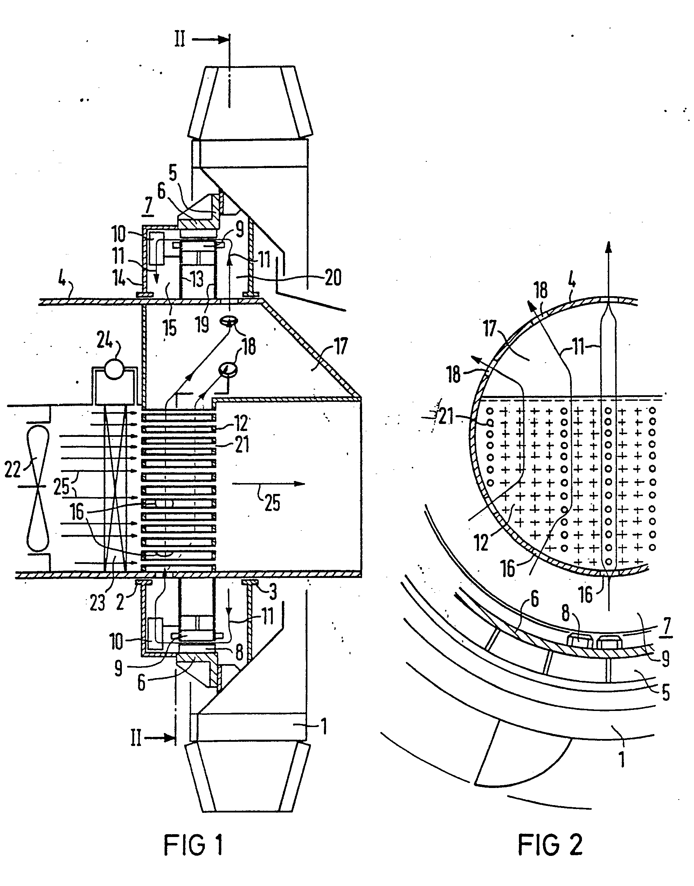

Im folgenden sei die Erfindung noch anhand des in den Figuren 1 und 2 schematisch dargestellten Ausführungsbeispiels näher erläutert. Fig. 1 zeigt einen Längsschnitt durch einen gemäß der Erfindung ausgebildeten Antrieb, Fig. 2 zeigt einen Teil eines entlang der Linien II-II verlaufenden Querschnitts.

Der langsam laufende Rotor 1 einer Arbeitsmaschine, wie ein Schaufelrad eines Großraumbaggers, ist über zwei einen axialen Abstand aufweisende Lager 2, 3 auf einem stehenden Rohrkörper 4 verhältnismäßig großen Umfangs gelagert. Am Ringkörper des Rotors 1 ist ein Tragring 5 angeflanscht, für den Läufer 6 eines synchronen elektrischen Motors 7 mit Außenpolen 8, dessen innenliegender Ständer 9 ebenfalls vom Rohrkörper getragen wird.

Der elektrische Motor 7 ist wegen des Einsatzes des Antriebes in staubiger Umgebung gekapselt ausgebildet und wird durch ein gasförmiges Kühlmedium, wie z. B. Luft, gekühlt, das durch ein oder mehrere Ventilatoren 10 in Zwangsumlauf in einem geschlossenen Kreislauf umgewälzt wird. Der Kreislauf des Kühlmediums ist durch Pfeile 11 angedeutet. Dieser Kreislauf führt zur Entwärmung der vom Kühlmedium aufgenommenen Verlustwärme des elektrischen Motors über einen Wärmetauscher 12, der im Innern des Rohrkörpers 4 angeordnet ist.

Der Kreislauf des gasförmigen Kühlmediums des elektrischen Motors 7 verläuft im einzelnen wie folgt:

Das Kühlmedium durchsetzt den elektrischen Motor in axialer Richtung und tritt vor der einen Stirnseite 13 des Motors 7 in einem zwischen der Kapselungswand 14 und der Stirnseite 13 liegenden Ringraum 15 über, in dem es sich gleichmäßig verteilt. In diesem Ringraum 15 befinden sich im Bereich des Wärmetauschers 12, der nur einen Teil des Rohrkörpers 4 ausfüllt, Öffnungen 16, über die das gasförmige Kühlmedium in das Innere des Wärmetauschers 12 eintritt und diesen radial durchströmt. Nach Austritt aus dem Wärmetauscher 12 wird im freibleibenden Innenraum 17 des Rohrkörpers 4 das Kühlmedium in axiale Richtung umgelenkt und zu Öffnungen 18 im Rohrkörper 4 geleitet, die dort auf einem der anderen Stirnseite 19 des elektrischen Motors 7 entsprechendem Umfang liegen. Durch diese Öffnungen 18 tritt das Kühlmedium in den vor der Stirnseite 19 liegenden Ringraum 20 über, verteilt sich dort gleichmäßig längs des gesamten Umfanges und tritt wieder in axialer Richtung in den elektrischen Motor 7 ein.

Der Wärmetauscher 12 ist als Luft-Luft-Kühler ausgebildet. Er weist achsparallel zum Rohrkörper 4 angeordnete Rohre 21 auf, die von aus der Umgebung der Arbeitsmaschine stammender Luft durchströmt werden, die durch den Ventilator 22 angesaugt wird. Vor dem Eintritt in die Rohre 21 des Wärmetauschers 12 wird die Luft über einen Filter 23 geleitet, der die am Einsatzort der Arbeitsmaschine in der Luft vorhandenen Verunreinigungen zurückhält, damit sich die Rohre 21 des Wärmetauschers 12 nicht zu leicht zusetzen bzw. der Wärmeübergang nicht erschwert wird.

Eine Differenz-Druckerfassung 24 von beiden Seiten des Filters 23 dient zur Bestimmung des Verschmutzungsgrades des Filters 23, so daß dieser rechtzeitig ausgewechselt werden kann. Die Pfeile 25 deuten das Strömen der aus der Umgebung entnommenen Luft durch den Wärmetauscher 12 an, diese wird danach wieder der Umgebung der Arbeitsmaschine zugeführt.

**Patentansprüche**

1. Antrieb eines langsam laufenden ringförmigen Rotors (1) einer Arbeitsmaschine, insbesondere des Schaufelrades eines Baggers, durch einen elektrischen Motor (7) wobei der Rotor (1) der Arbeitsmaschine über zwei axialen Abstand zueinander aufweisende Lager (2,3) auf einem stehenden Tragkörper gelagert ist, zwischen denen der an dem Rotor (1) befestigte Läufer (6) und der innenliegende, ebenfalls vom Tragkörper getragene Ständer (9) des elektrischen Motors (7) angeordnet ist, dadurch gekennzeichnet, daß der elektrische Motor (7) gekapselt ausgebildet ist und der Tragkörper ein Rohrkörper (4) ist und daß das zur Kühlung des Motors (7) erforderliche gasförmige Kühlmedium im Zwangsumlauf in einem geschlossenen Kühlkreis geführt und zur Rückkühlung über einen im Innern des Rohrkörpers (4) angeordneten Wärmetauscher (12) geleitet ist.

2. Antrieb nach Anspruch 1, dadurch gekennzeichnet, daß der Wärmetauscher (12) achsparallel zum Rohrkörper (4) angeordnete Rohre (21) aufweist, zwischen denen das über Öffnungen (16) im Rohrkörper (4) von einer Stirnseite (13) des Motors (7) her radial eingeleitete Kühlmedium des Motors (7) strömt.

3. Antrieb nach Anspruch 2, dadurch gekennzeichnet, daß die Rohre (21) des Wärmetauschers (12) nur in einem Teil des Rohrkörpers (4) angeordnet sind und daß in diesem Teil des Rohrkörpers (4) Öffnungen (16) für das Kühlmedium auf einem der einen Stirnseite (13) des Motors (7) entsprechenden Umfang liegen, während die Öffnungen (18) im restlichen Teil (17) des Rohrkörpers (4) auf einem der anderen Stirnseite (19) des Motors (7) entsprechenden Umfang liegen.

4. Antrieb nach Anspruch 1, 2 oder 3 dadurch gekennzeichnet, daß durch die Rohre (21) des Wärmetauschers (12) aus der Umgebung entnommene Luft strömt, die dem Wärmetauscher (12) über Filter (23) zugeführt ist.

5. Antrieb nach Anspruch 1, dadurch gekennzeichnet, daß der Motor (7) als synchrone Außenpolmaschine ausgebildet ist.

**Claims**

1. A drive for a slow-running annular rotor (1) of a working machine, particularly but not exclusively of the bucket-wheel of an excavator, driven by an electric motor (7), where the rotor (1) of the working machine is positioned on a stationary support body by two bearings (2, 3) which are spaced axially from one another and between which the runner (6) which is secured to the rotor (1), and the inner stator (9) of the electric motor (7) which is also supported by the support body, are arranged, characterised in that the electric motor (7) is encased and the support body is a tubular body (4); and that the gaseous cooling medium required for cooling the motor (7) is directed in a forced circulation in a closed cooling circuit and, for return cooling, is directed through a heat exchanger (12) which is arranged inside the tubular body (4).

2. A drive as claimed in Claim 1, characterised in that the heat exchanger (12) has pipes (21) which are arranged so as to be parallel to the axis of the tubular body (4) and between which flows the cooling medium for the motor (7) which is introduced through openings (16) in the tubular body (4) from an end face (13) of the motor (7).

3. A drive as claimed in Claim 2, characterised in that the pipes (21) of the heat exchanger (12) are only arranged in a section of the tubular body (4); and that, in this section of the tubular body (4), openings (16) for the cooling medium are arranged on a periphery which corresponds to the one end face (13) of the motor (7), whilst the openings (18) in the remaining part (17) of the tubular body (4) are arranged on a periphery corresponding to the other end face (19) of the motor (7).

4. A drive as claimed in Claim 1, 2 or 3, characterised in that air which is extracted from the ambient atmosphere and supplied to the heat exchanger (12) through filters (23), flows through the pipes (21) of the heat exchanger (12).

5. A drive as claimed in Claim 1, characterised in that the motor (7) is a synchronous external pole machine.

**Revendications**

1. Entraînement d'un rotor annulaire (1) à faible vitesse de rotation d'une machine à exécuter des travaux, en particulier de la roue-pelle d'une excavatrice, à l'aide d'un moteur électrique (7), du type dans lequel le rotor (1) de la machine à exécuter des travaux est monté sur un corps de support immobile par l'intermédiaire de deux paliers (2, 3) présentant entre eux une distance axiale et entre lesquels sont disposés l'induit (6) fixé au rotor (1) et l'inducteur (9) du moteur électrique (7), qui est situé à l'intérieur et qui est également porté par le corps de support, caractérisé par le fait que le moteur électrique (7) est réalisé sous forme blindée et le corps de support est un corps tubulaire (4), et que le milieu réfrigérant gazeux qui est nécessaire pour le refroidissement du moteur (7) est passé en circuit forcé dans un circuit de réfrigération fermé et est amené, pour son refroidissement, à passer dans un échangeur de chaleur (12) disposé à l'intérieur du corps tubulaire (4).

2. Entraînement selon la revendication 1, caractérisé par le fait que l'échangeur de chaleur (12) comporte des tubes (21) parallèles à l'axe du corps tubulaire (4) et entre lesquels s'écoule le milieu réfrigérant du moteur (7), qui est introduit radialement à travers des ouvertures (16) ménagées dans le corps tubulaire (4) et à partir d'un côté frontal (13) du moteur (7).

3. Entraînement selon la revendication 2, caractérisé par le fait que les tubes (21) de l'échangeur de chaleur (12) ne sont disposés que dans une partie du corps tubulaire (4), et que dans cette partie du corps tubulaire (4) des ouvertures (16) pour le milieu réfrigérant se situent sur une périphérie correspondant à l'un (13) des côtés frontaux du moteur (7), alors que les ouvertures (18) ménagées dans la partie restante (17) du corps tubulaire (4), se situent sur une périphérie qui correspond au second côté frontal (19) du moteur (7).

4. Entraînement selon la revendication 1, 2 ou 3, caractérisé par le fait qu'à travers des tubes (21) de l'échangeur de chaleur (12) circule de l'air prélevé de l'environnement et amené à l'échangeur de chaleur (12) en passant par des filtres (23).

5. Entraînement selon la revendication 1, caractérisé par le fait que le moteur est réalisé sous la forme d'une machine synchrone à pôles extérieurs.

FIG 1

FIG 2